(19) Europäisches Patentamt
European Patent Office
Office européen des brevets

(11) Veröffentlichungsnummer: **0 339 424**
**A2**

(12) **EUROPÄISCHE PATENTANMELDUNG**

(21) Anmeldenummer: **89106828.0**

(51) Int. Cl.[4]: **C08G 75/02**

(22) Anmeldetag: **17.04.89**

(30) Priorität: **29.04.88 DE 3814533**

(43) Veröffentlichungstag der Anmeldung:
**02.11.89 Patentblatt 89/44**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Burkhard, Dr.**
**Virneburgstrasse 9**
**D-4150 Krefeld 11(DE)**
Erfinder: **Meyer, Rolf-Volker, Dr.**
**Buchheimer Strasse 23**
**D-4150 Krefeld(DE)**

(54) **Phosphingruppen-haltige Polyarylensulfide.**

(57) Die Erfindung betrifft neue lineare und verzweigte Co-Polyarylensulfide mit eingebauten aromatischen oder araliphatischen, Phosphingruppen-haltigen Comonomeren und Produkte, die durch spezielle Hitzebehandlung aus den Phosphingruppen-haltigen Polyarylensulfiden erhältlich sind.

EP 0 339 424 A2

## Phosphingruppen-haltige Polyarylensulfide

Die Erfindung betrifft neue lineare und verzweigte Co-Polyarylensulfide mit eingebauten aromatischen oder araliphatischen, Phosphingruppen-haltigen Comonomeren und Produkte, die durch spezielle Hitzebehandlung aus den Phosphingruppen-haltigen Polyarylensulfiden erhältlich sind.

Polyarylensulfide werden als inerte, hochtemperatur-beständige Thermoplaste, die zudem einen hohen Füllgrad mit Glasfasern und/oder anderen Mineralien erlauben, zunehmend in der Elektroindustrie eingesetzt.

Der Einsatz dieser polymeren, insbesondere des Polyparaphenylensulfids (PPS), nimmt auch in Bereichen, die bislang Duroplasten vorbehalten waren, wegen der einfacheren Verarbeitung zu. Hierzu zählt neben einfachen Bauteilen wie Transistoren und Kondensatoren auch die Herstellung von Mikrochips.

Es ist bekannt, daß eine verzögert einsetzende Kristallisation eines Thermoplasten in bestimmten Fällen von Vorteil sein kann, beispielsweise um eine frühzeitige Verfestigung der Fließfront beim Spritzgießen zu vermeiden.

Es ist bekannt (z.B. DE-OS 3 517 452), daß sich durch thermische Nachbehandlung in Gegenwart von basischen Metallverbindungen die Kristallisationstemperatur erniedrigen läßt. Jedoch können diese Polyarylensulfide einen erhöhten Elektrolytgehalt haben.

Es wurde nun gefunden, daß ein aus Dihalogenbenzol, bevorzugt p-Dichlorbenzol, und di- oder trihalogenierten Triaryl- oder Arylalkylphosphinen und Natriumsulfid hergestelltes Polyarylensulfid eine im Vergleich zum Polyparaphenylensulfid stark erniedrigte Kristallisationstemperatur ohne erhöhten Elektrolyt-Gehalt aufweist. Eine weitere Reduzierung der Kristallisationstemperatur kann durch nachträgliche Hitzebehandlung der erfindungsgemäßen neuen Polyarylensulfide erreicht werden.

Gegenstand der Erfindung sind daher lineare oder verzweigte Polyarylensulfide, die zu 0,1 - 10 Mol%, bevorzugt zu 0,2 - 2,5 Mol%, aus Monomeren der Formel (I)

$$Ar-\underset{\underset{R^2}{|}}{P}-R^1 \qquad (I),$$

und zu 90 - 99,0 Mol%, bevorzugt zu 97,5 - 99,8 Mol% aus Monomeren der Formel (II)

Hal-Ph-Hal (II),

in welchen

Ar ein $C_6$-$C_{14}$-Arylrest oder $C_5$-$C_{14}$-heteroaromatischer Rest mit 1-3 Halogenatomen, vorzugsweise 1-2 Chloratomen ist,

$R^1$ gleich Ar oder ein $C_1$-$C_{22}$-Alkyl oder $C_6$-$C_{15}$-Aralkyl oder ein $C_6$-$C_{14}$-Arylrest sein kann und

$R^2$ gleich Ar oder $R^1$ sein kann

und die Summe aller Halogenatome mindestens 2, vorzugsweise 2 oder 3 beträgt,

Ph ein para- oder meta-Phenylen- oder ein 4,4′-Diphenylenrest, bevorzugt ein para-Phenylenrest, ist und

Hal für Halogen wie Fluor, Chlor, Brom oder Jod, bevorzugt Chlor, steht,

in an sich bekannter Weise hergestellt werden.

Bei den heteroaromatischen Resten können bis zu zwei Ring-C-Atome durch N, O oder S ersetzt sein.

Als Substituenten, die gegebenenfalls an den aromatischen und heteroaromatischen Resten vorhanden sein können, seien beispielsweise genannt $C_1$-$C_4$-Alkyl, $C_6$-$C_{14}$-Aryl.

Die Comonomeren I können statistisch oder in Blöcken in die Hauptkette eingebaut sein.

Beispiele für Comonomere der Formel I sind 4,4′,4″-Trichlor-triphenylphosphin, 3,3′,3″-Trichlor-triphenylphosphin, 4,4′-Dichlor-triphenylphosphin, Bis- 4-chlorphenyl-methylphosphin und Bis-4-chlorphenyl-methylphosphin und Bis-4-chlorphenyl-hexylphosphin, 3,5-Dichlorphenyl-diphenylphosphin, 2,4-Dichlorphenyl-diphenylphosphin, 3,5-Dichlorphenyl-dimethylphosphin, 2,4-Dichlorphenyl-dimethylphosphin, Dimethyl-2,4,6-trichlorphenylphosphin, Diphenyl-2,4-6-trichlorphenylphosphin, 3,5-Dichlorphenyl-dihexylphosphin, 3,5-Dichlorphenyl-phospholan und 2,4-Dichlorphenylphospholan.

Die erfindungsgemäßen Polyarylensulfide sind z.B. durch Umsetzung der Monomeren der Formel I und II mit einem sulfidfreisetzenden Reagenz und einer anorganischen Base in einem dipolar-aprotischen Solvens herstellbar.

Als anorganische Base und sulfidfreisetzendes Reagenz werden in bekannter Weise bevorzugt Alkalimetallsulfide, besonders bevorzugt Natriumsulfid, eingesetzt. Als dipolar-aprotische Solventien werden z.B. N-Alkyllactame, bevorzugt N-Methyllactame, besonders bevorzugt N-Methylcaprolactam eingesetzt.

Die Phosphine I werden zu 0,1 - 10 Mol%, bevorzugt zu 0,5 - 2,5 Mol%, eingesetzt, die Summe an eingesetzten Monomeren der Formel (II) beträgt 90 - 99.9 Mol%, bevorzugt 97,5 - 99,5 Mol% bezogen auf die Summe an eingesetzten Verbindungen der Formeln (I) und (II). Vorzugsweise werden die Phosphine eingesetzt, deren P-Atom in die Kette eingebaut wird.

Vom Alkalisulfid werden 1 bis 2, bevorzugt 1 bis 1,1 Äquivalente, eingesetzt, das Volumenverhältnis Lösungsmittel/Feststoff liegt zwischen 1:1 und 10: 1.

Die Umsetzung kann in Gegenwart von Katalysatoren wie ε-Caprolactam, Aminosäuren oder Alkaliacetaten, -chloriden, -fluoriden und -aryl- bzw. -alkylsulfonaten durchgeführt werden.

Die Reaktionstemperatur beträgt 150 - 300° C. Die Reaktion kann bei Drücken von 1 - 20 bar durchgeführt werden.

Die Alkalisulfide können in wasserfreier Form oder als Hydrate eingesetzt werden. Die Entwässerung kann in einem oder mehreren Schritten, bevorzugt durch z. B. azeotropes Abdestillieren des Wassers, z. B. mit den Monomeren der Formel II selbst als Schlepper, erfolgen. Zur Regenerierung der Alkalisulfide werden gegebenenfalls Alkalihydroxide eingesetzt.

Das Zusammengeben der Reaktanden kann im Prinzip in beliebiger Form erfolgen. Die Dihalogenaromaten und die halogenierten Phosphine der Formel I können zusammen oder getrennt, kontinuierlich, in Portionen oder direkt auf einmal zu dem Alkalisulfid, dem Lösungsmittel oder portionsweise zu einem Teil davon gegeben werden.

Es können auch das Alkalisulfid zusammen mit dem Lösungsmittel oder einem Teil davon zu den Verbindungen der Formel I und den Dihalogenaromaten II gegeben werden. Es können auch alle Reaktanden direkt zusammengegeben werden. Andere Kombinationen der Zugabe der Reaktanden sind ebenfalls möglich.

Die Dosierzeit der Reaktionspartner dauert 0 - 10 h, die Nachkondensationszeit 3 - 24, vorzugsweise 6 - 14 h.

Die Aufarbeitung des Reaktionsgemisches und die Isolierung der erfindungsgemäßen Polyarylensulfide kann in bekannter Weise erfolgen, z.B. indem das Reaktionsgemisch in einem Alkohol, z. B. Isopropanol gefällt wird und das ausgefallene Polyarylensulfid z. B. nach Ansäuern elektrolytfrei gewaschen wird. Als Waschflüssigkeit wird vorzugsweise Wasser eingesetzt.

Die erfindungsgemäßen Polyarylensulfide haben schon bei sehr geringen Comonomergehalten eine stark verringerte Kristallisationstemperatur, welche durch thermische Nachbehandlung noch vermindert werden kann.

Ein weiterer Gegenstand der Erfindung sind auch die Produkte, die sich durch Erhitzen der erfindungsgemäßen Phosphingruppen-haltigen Polyarylensulfide auf 280 -450° C für 1 - 100 Min., bevorzugt 2 - 45 Min., herstellen lassen. Das Erhitzen kann unter Inertgas (z.B. $N_2$, Ar) gegebenenfalls im Vakuum vorgenommen werden. Die thermisch nachbehandelten, erfindungsgemäßen Polyarylensulfide zeichnen sich durch eine weitere stark verminderte Kristallisationsgeschwindigkeit aus.

Die erfindungsgemäßen Polyarylensulfide eignen sich z. B. zur Herstellung von Formkörpern nach dem Verfahren des Spritzgießens und der Extrusion, bevorzugt zur Umhüllung von Mikrochips und anderen elektronischen Bauteilen etc..

## Beispiele

### Allgemeine Arbeitsvorschrift

Man legt 608,24 g (4,16 Mol) p-Dichlorbenzol und 2,5 l N-Methylcaprolactam in einem 4 l-Stahlkessel vor, erhitzt auf 216° C und tropft ein Gemisch aus 1149,3 g (8,94 Mol) Natriumsulfidtrihydrat, 325 g Wasser, 4 g (0,1 Mol) Natriumhydroxid und 141,1 g (1,24 Mol) ε-Caprolactam so zu, daß die Sumpftemp. bei 215° C bleibt. Dabei destilliert das zugesetzte Wasser und das Hydratwasser ab. Während der Natriumsulfidzugabe wird 608,24 g (4,16 Mol) p-Dichlorbenzol zugetropft. Die Zugabe dauert 4 h. Anschließend wird noch 9 h auf 240° C erhitzt und der Inhalt des 4 l-Kessels in 40 l Isopropanol abgelassen. Nach ansäuren auf pH 1 filtiert man das ausgefallene Polymer ab und wäscht mit destilliertem Wasser elektrolytfrei.

### Vergleichsbeispiel

Man verfährt analog der allgemeinen Arbeitsvorschrift. Die Ausbeute beträgt 95 %.

Einige Eigenschaften der Produkte gemäß Vergleichsbeispiel und den folgenden Beispielen sind in Tabelle I zusammengefaßt.

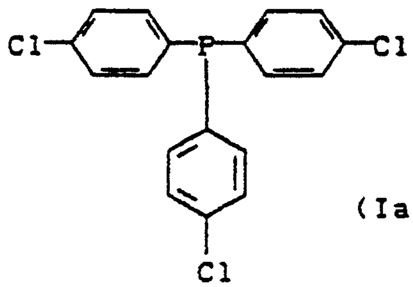

(Ia)

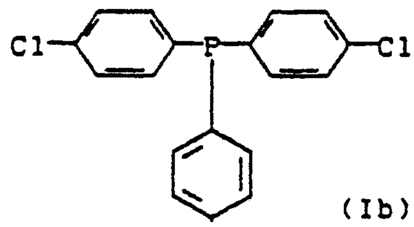

(Ib)

Beispiel 1

Man verfährt analog der allgemeinen Arbeitsvorschrift. Statt 608,24 g p-Dichlorbenzol wird ein Gemisch aus 25 g Ib und 597,24 g p-Dichlorbenzol während der Entwässerung zugetropft. Die Ausbeute beträgt 95 %.

Beispiel 2

Man verfährt analog der allgemeinen Arbeitsvorschrift. Statt 608,24 g p-Dichlorbenzol wird ein Gemisch aus 50 g Ib und 586,24 g p-Dichlorbenzol während der Entwässerung zugetropft. Die Ausbeute beträgt 95 %.

Beispiel 3

Man verfährt analog der allgemeinen Arbeitsvorschrift. Statt 608,24 g p-Dichlorbenzol wird ein Gemisch aus 15 g Ia und 602,16 g p-Dichlorbenzol während der Entwässerung zugetropft. Die Ausbeute beträgt 95 %.

Beispiel 4

Man verfährt analog der allgemeinen Arbeitsvorschrift. Statt 608,24 g p-Dichlorbenzol wird ein Gemisch aus 30 g Ia und 596,08 g p-Dichlorbenzol zugetropft. Die Ausbeute beträgt 95 %.

Beispiele 5 - 8

Man erhitzt die Produkte der Beispiele 1 - 4 jeweils 10 Min. unter Stickstoff auf 400 °C.

Beispiele 9 - 12

Man erhitzt die Produkte der Beispiele 1 - 4 jeweils 45 Min. unter Stickstoff auf 400 °C.

Tabelle I

| Eigenschaften der Phosphingruppen-haltigen Polyarylensulfide. | | | | | | | |
|---|---|---|---|---|---|---|---|
| Bsp. | Mol% Ia | an Ib | p-Dcb | Zeit (min) bei 400 °C erhitzt | $T_k$ (°C) | $H_k$ (J/g) | Tm (°C) |
| Vgl. | 0 | 0 | 100 | 0 | 235 | 53,9 | 278 |
| 1 | 0 | 0,91 | 99,09 | 0 | 201,1 | 36,5 | 274,1 |
| 2 | 0 | 1,82 | 98,18 | 0 | 195,9 | 36,7 | 272,0 |
| 3 | 0,5 | 0 | 99,5 | 0 | 227,3 | 45,6 | 275,7 |
| 4 | 1,0 | 0 | 99,0 | 0 | 215,7 | 42,8 | 269,0 |
| 5 | 0 | 0,91 | 99,09 | 10 | 172,7 | 29,1 | 270,4 |
| 6 | 0 | 1,82 | 98,18 | 10 | 167,3 | 38,8 | 266,2 |
| 7 | 0,5 | 0 | 99,5 | 10 | 193,8 | 45,4 | 278,1 |
| 8 | 1,0 | 0 | 99,0 | 10 | 189,0 | 44,5 | 274,7 |
| 9 | 0 | 0,91 | 99,09 | 45 | 164,0 | 37,5 | 266,2 |
| 10 | 0 | 1,82 | 98,18 | 45 | 155,6 | 24,7 | 257,9 |
| 11 | 0,5 | 0 | 99,5 | 45 | 188,6 | 41,1 | 275,0 |
| 12 | 1,0 | 0 | 99,0 | 45 | 183,1 | 41,1 | 268,7 |

p-Dcb = p-Dichlorbenzol

Die Werte für $T_k$, $H_k$ und Tm wurden durch DSC-Messungen bestimmt, wobei $T_k$ die Kristallisationstemperatur beim Abkühlen aus der Schmelze, $H_k$ die Kristallisationswärme und Tm der Kristallitschmelzpunkt ist.

## Ansprüche

1. Lineare oder verzweigte Polyarylensulfide, die zu 0,1 - 10 Mol.%, bevorzugt zu 0,2 - 2,5 Mol%, aus Monomeren der Formel

$$Ar-\underset{\substack{|\\R^2}}{P}-R^1 \qquad (I),$$

und zu 90 - 99,9 Mol%, bevorzugt zu 97,5 - 99,8 Mol%, aus Monomeren der Formel II
Hal-Ph-Hal (II),
in welchen
Ar ein $C_6$-$C_{14}$ aromatischer Rest oder $C_5$-$C_{14}$-heteroaromatischer Rest mit 1-3 Halogenatomen ist,
$R^1$ gleich Ar oder ein $C_1$-$C_{22}$ Alkyl-, $C_6$-$C_{15}$-Aralkyl- oder $C_6$-$C_{14}$ Arylrest sein kann,
$R^2$ gleich Ar oder $R^1$ sein kann
und die Summe aller Halogenatome mindestens 2 beträgt,
Ph ein para- oder meta-Phenylen- oder ein 4,4′-Diphenylenrest ist und
Hal für Halogen steht,
in an sich bekannter Weise hergestellt werden.

2. Polyarylensulfide nach Anspruch 1, dadurch gekennzeichnet, daß sie nach ihrer Herstellung und Isolierung 1 - 100 Min. auf 280 - 450 °C erhitzt wurden.

3. Verwendung von Polyarylensulfiden nach Anspruch 1 zur Herstellung von geformten Körpern.